# EUROPÄISCHE PATENTSCHRIFT

(11) **EP 1 900 654 B1**
(45) Veröffentlichungstag und Bekanntmachung des Hinweises auf die Patenterteilung: **14.10.2009**
(21) Anmeldenummer: 07114704.5
(22) Anmeldetag: 21.08.2007
(51) Int. Cl.: B65G 1/04, B65G 11/06

(54) **Warenannahmeautomat**
Automatic goods receiving device
Automate de réception des marchandises

(30) Priorität: 12.09.2006 DE 202006013956 U
(43) Veröffentlichungstag der Anmeldung: 19.03.2008
(73) Patentinhaber: GEBR. WILLACH GmbH, 53809 Ruppichteroth (DE)
(72) Erfinder: Willach, Jens, 53783, Eitorf (DE); Schumacher, Heribert, 53809, Ruppichteroth (DE); Feindt, Arend, 53721, Siegburg (DE)
(74) Vertreter: von Kreisler Selting Werner

(56) Entgegenhaltungen:
- EP-A- 1 167 246
- EP-A- 1 407 984
- GB-A- 1 558 049

## Beschreibung

Die Erfindung betrifft einen Warenannahmeautomaten, insbesondere zum Einlagern von Packungen in ein automatisches Warenlager, das zahlreiche Lagerstellen und einen die Packungen transportierenden Lager-Manipulator aufweist, mit einer von einem Eingabetrichter abgehenden Transportvorrichtung.

EP 1 407 984 B1 (Willach) offenbart einen Warenannahmeautomat gemäß dem Oberbegriff des Anspruchs 1 und beschreibt ein Regallager mit Ziehregalen. Das Regallager dient zur Aufnahme von Packungen, die beispielsweise Medikamente enthalten können. Das Regallager enthält eine Transportvorrichtung, die entlang eines Ganges, zu dessen beiden Seiten sich Ziehregale befinden, verfahrbar ist. Die Transportvorrichtung trägt einen Manipulator, der im Stande ist, die Packungen aus einem der Ziehregale zu entnehmen und sie an eine Aufnahmevorrichtung zu transportieren, an die sich ein Transportband anschließt. Beim Einlagern von Packungen in das Regallager werden die Packungen manuell in das Warenübergaberegal eingelegt, von dem Manipulator ergriffen und an eine Lagerstelle transportiert.

EP 0 620 528 B2 (Schausten) beschreibt einen Warenannahmeautomaten mit automatischer Vereinzelung und Vorsortierung eingegebener Packungen. Ein auf den Packungen angebrachter Barcode wird mit einem Scanner gelesen, um die Packung zu identifizieren.

DE 10 2004 012 133 A1 (Indunorm) beschreibt einen Warenannahmeautomaten mit einem trichterförmigen Einwurf, einem sich daran anschließenden Stufenförderer, der die Packungen auf eine horizontale Ablagefläche transportiert und einer Kamera, die die auf der Ablagefläche liegenden Packungen fotografiert. Mit Hilfe einer Bildverarbeitung erfolgt eine Erkennung der Packungen, einschließlich der Position und der Dimensionen. Aufgrund dieser Daten kann die Packung an einer geeigneten Lagerstelle eines Lagerautomaten abgelegt werden.

Der Erfindung liegt die Aufgabe zugrunde, einen Warenannahmeautomaten zum Einlagern von Packungen in ein automatisches Warenlager zu schaffen, der mit einfachen technischen Mitteln die Packungen in eine definierte Position bringt.

Der Warenannahmeautomat der vorliegenden Erfindung ist durch den Anspruch 1 definiert. Hiernach führt die Transportvorrichtung zu einer Wendelrutsche, auf der eine Ausrichtung der Packungen erfolgt und hinter der eine Selektionsvorrichtung vorgesehen ist.

Die Erfindung ermöglicht das ungeordnete Zuführen von Packungen unterschiedlicher Formate und Größen mit anschließender Vereinzelung und Ausrichtung, so dass eine automatische Identifizierung erfolgen kann. Die Wendelrutsche bildet ein geeignetes Element, um quaderförmige Packungen in eine geeignete Ausrichtung zu bringen. Bei einer Wendelrutsche werden die Packungen gegen die Umfangswand gedrückt, wo sie sich mit einer Hauptfläche anlegen. Wenn eine Packung quer auf die Wendelrutsche gelangt, wird sie an demjenigen Ende, das der Längsachse der Wendelrutsche zugewandt ist, wegen der dort vorhandenen größeren Steigung, verstärkt nach unten beschleunigt, so dass die Packung eine Drehung erfährt und sich dann mit einer ihrer Längsseiten gegen die Umfangswand der Wendelrutsche legt. Die Wendelrutsche hat ferner die Wirkung, dass die Packungen bevorzugt mit ihrer Breitseite auf dem Boden der Wendelrutsche aufliegen und nicht hochkant die Wendelrutsche durchlaufen. Wenn zwei Packungen nebeneinander gleichzeitig auf die Wendelrutsche gelangen, wird die innen liegende Packung stärker beschleunigt als die äußere Packung, wodurch sie die äußere Packung überholt und sich danach an die Umfangswand anlegt. Die Wendelrutsche ist daher ein geeignetes Mittel, um die Packungen in eine definierte Ausrichtung zu bringen, nämlich mit auf dem Boden aufliegender Breitseite, wobei eine Stirnseite der Packung nach vorne und die andere Stirnseite nach hinten zeigt.

Die Selektionsvorrichtung verwirft solche Packungen, die für die Einlagerung ungeeignet sind, in einen Abfallkorb, während sie die anderen Packungen zur Übergabe an das automatische Warenlager freigibt.

Eine Grob-Vereinzelung der Packungen ist durch das Zusammenspiel der Transportvorrichtung und der Wendelrutsche möglich. Hierbei ist die Transportvorrichtung derart angetrieben, dass sie eine Packung bis zu einer Abgabestelle fördert und einen darüber hinaus gehenden Förderschritt nur dann durchführt, wenn ein Sensor am Fuße der Wendelrutsche keine Packung feststellt. Auf der Transportvorrichtung können die Packungen zunächst in willkürlicher Anordnung und Reihenfolge gefördert werden. Wenn der genannte Sensor feststellt, dass keine Packung vorhanden ist, wird die Transportvorrichtung veranlasst, einen definierten Förderschritt auszuführen, wodurch die vordere Packung auf die Wendelrutsche übergeben wird und auf dieser hinabgleitet. Solange der Sensor eine Packung feststellt, erfolgt kein weiterer Antrieb der Transportvorrichtung. Zeigt der Sensor an, dass keine Packung mehr vorhanden ist, wird die Transportvorrichtung wieder in Betrieb gesetzt bis eine vordere Packung auf die Wendelrutsche übergeben wird.

Vorzugsweise hat die Wendelrutsche einen Rutschenboden mit Knicklinien, wobei die Knicklinien Flächen mit verschiedenen Steigungen voneinander trennen. Durch Vorsehen von Irregularitäten im Rutschenboden wird eine herabgleitende Packung impulsweise angestoßen, wodurch der Ausrichteffekt verbessert wird. Es wird verhindert, dass die Packung gewissermaßen am Rutschenboden klebt, ohne sich in die korrekte Position in Anlagerung an die Seitenwand der Rutsche zu drehen.

Zum Vereinzeln der Packungen kann ein gesteuerter Stopper vorgesehen sein, der hintereinander liegende Packungen voneinander trennt.

In Weiterbildung der Erfindung ist eine Vermessungsstation vorgesehen mit einem ersten Sensor zur Messung der Höhe und einem zweiten Sensor zur Messung der Breite der Packung. Ein Auswerfer leitet die Packung auf die Transportvorrichtung zurück, wenn die gemessene Höhe größer ist als die gemessene Breite. Auf diese Weise wird vermieden, dass eine Packung in falscher Orientierung an das Warenlager übergeben wird. Eine Packung, die in falscher Orientierung liegt, wird an die Transportvorrichtung zurückgegeben und durchläuft die Wendelrutsche ein zweites Mal. Hingegen werden Packungen, deren Identifikation nicht maschinell gelesen werden kann, in einen Abfallkorb befördert.

An einer Übergabestation kann ein auf die Packungen zugreifender Greifer vorgesehen sein, der die Packungen in einem Abholfach ablegt.

Aus dem Abholfach kann der Lager-Manipulator die Packungen einzeln abholen und in das Regallager überführen.

Im Folgenden werden unter Bezugnahme auf die Zeichnungen Ausführungsbeispiele der Erfindung näher erläutert.

Es zeigen:
- Fig. 1: eine perspektivische Frontansicht eines automatischen Warenlagers mit Warenannahmeautomaten,
- Fig. 2: eine Ansicht des inneren Aufbaus des Warenannahmeautomaten,

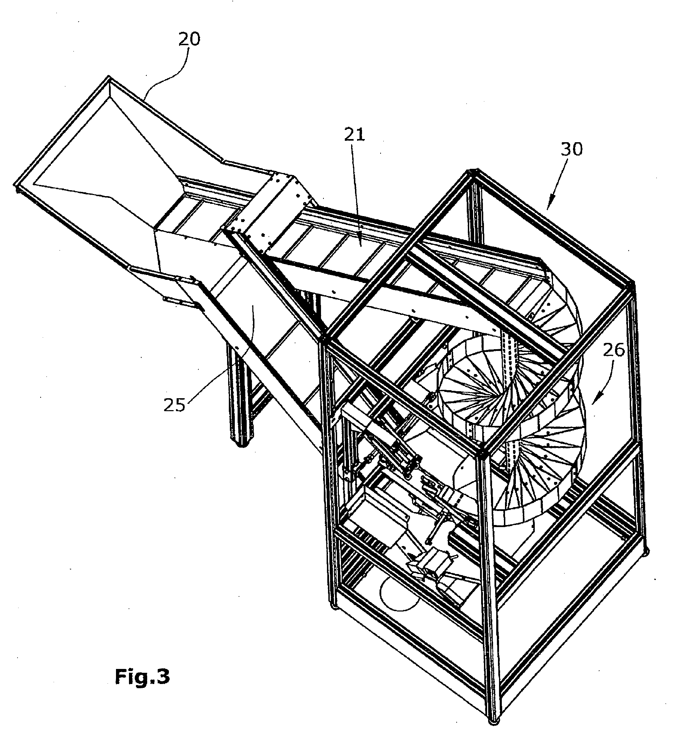

- Fig. 3: eine Ansicht von oben,
- Fig. 4: eine Detailansicht der Abgabestelle zwischen Transportvorrichtung und Wendelrutsche,
- Fig. 5: eine Ansicht der Wendelrutsche,
- Fig. 6: eine Ansicht auf das Abholfach, die Vermessungsstation und die Übergabestation,
- Fig. 7: eine andere Ansicht des unteren Bereichs der Wendelrutsche mit Darstellung des Greifers und des Abfallkorbes,
- Fig. 8: eine Darstellung eines Teils der Wendelrutsche im abgewickelten Zustand vor der Montage und
- Fig. 9: eine alternative Ausführungsform.

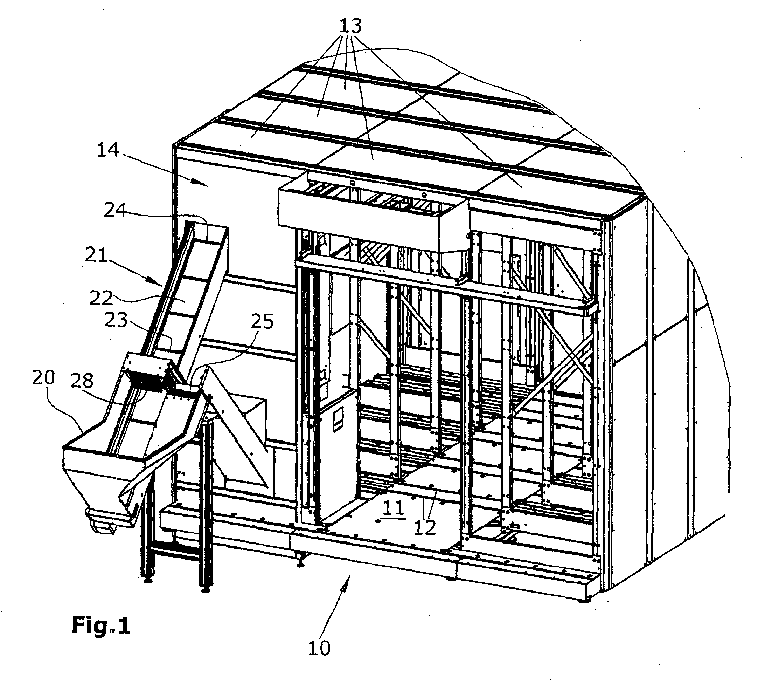

Figur 1 zeigt ein automatisches Warenlager 10, das zahlreiche Ziehregale aufweist, die unter Steuerung durch einen Computer in einen zentralen Gang 11 gefahren werden können. In Figur 1 sind die Ziehregale nicht dargestellt, jedoch die Schienen 12, in denen sie geführt sind. Diese Schienen verlaufen quer zum Gang. Das Ziehregallager ist in gleicher Weise ausgebildet wie dasjenige von EP 1 407 984 B1.

Das Warenlager 10 ist aufgeteilt in einzelne Module 13, die einen rechteckigen Grundriss haben. Einige der Module 13 enthalten die Ziehregale und andere bilden den Gang 11.

In dieses Modulsystem eingepasst ist der Warenannahmeautomat 14, der in eines der Module integriert ist. Der Warenannahmeautomat 14 befindet sich an der Frontseite des Warenlagers 10, die die Beschickungsseite und hier zugleich die Warenausgabeseite bildet.

Der Warenannahmeautomat 14 enthält eine vor dem Gehäuse des Warenlagers 10 angeordnete Eingabestelle 20, bei der es sich hier um einen Trichter handelt, in welchen der aus einzelnen Packungen bestehende Inhalt eines Warenbehälters wahllos hineingeschüttet werden kann. Das Warenlager mit dem Warenannahmeautomat ist typischerweise ein Apothekenlager, in dem Medikamente und andere Apothekenprodukte, in Schachteln verpackt, gelagert werden. Zum Einlagern werden die angelieferten Packungen, die unsortiert sind, manuell in den Trichter eingefüllt. Von der Eingabestelle 20 führt eine Transportvorrichtung 21, die im vorliegenden Fall ein Transportband 22 mit querlaufenden Stollen 23 aufweist, zu einer Abgabestelle 24, die sich am oberen Ende der Transportvorrichtung 21 befindet. Die Transportvorrichtung 21 ist hier ein Steilförderer, an dessen unterem Ende sich die Eingabestelle 20 befindet.

Zu der Eingabestelle 20 führt ferner ein Rücklaufförderer 25, der aus dem Warenannahmeautomaten 14 herausführt und Packungen, die eine unrichtige Orientierung hatten, zur Eingabestelle zurückführt, damit diese die Transportvorrichtung 21 noch einmal durchlaufen.

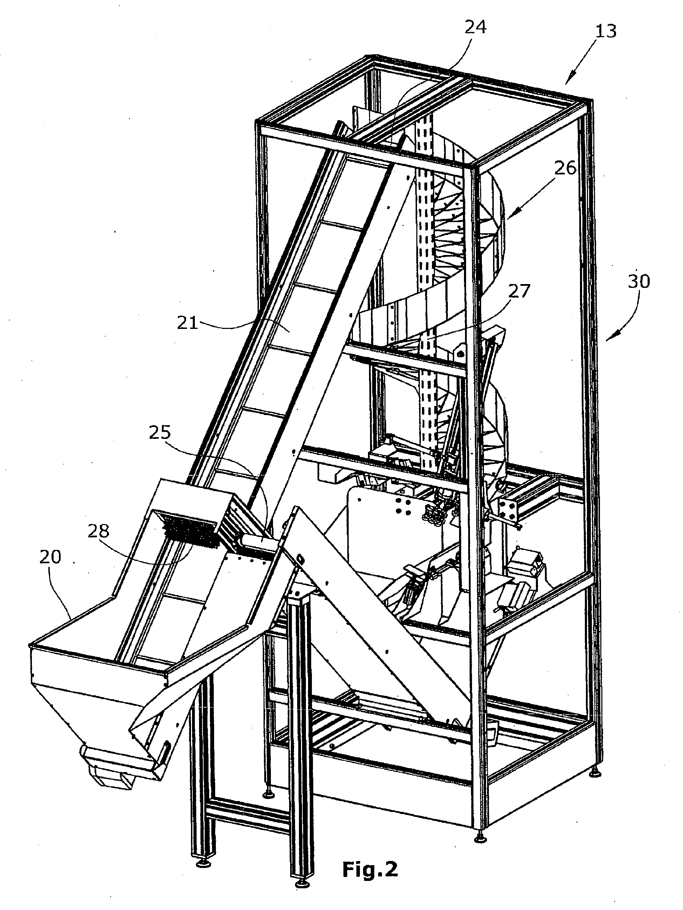

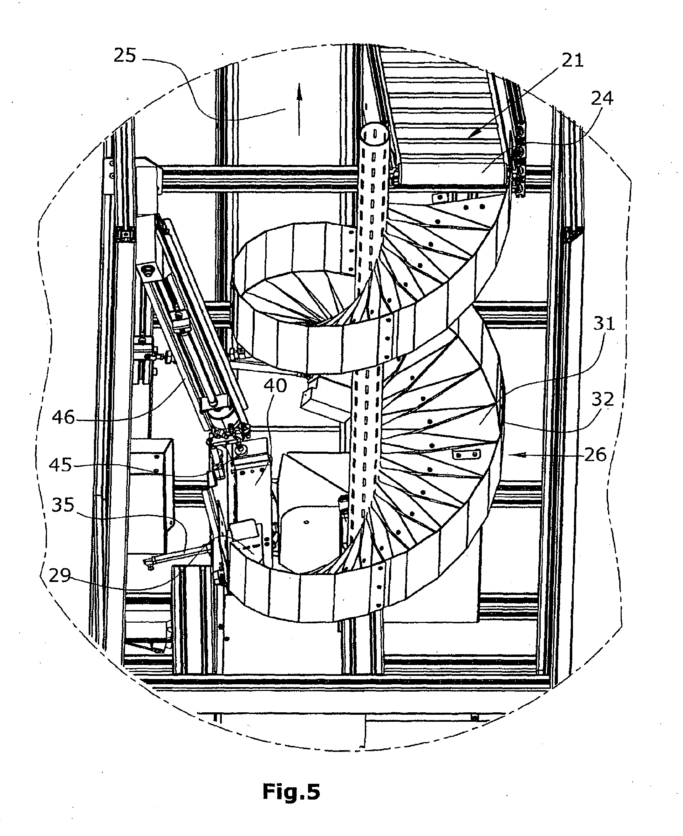

Figur 2 zeigt das Skelett des Moduls 13, in dem der Warenannahmeautomat untergebracht ist. In dieses Modul führt die Transportvorrichtung 21 hinein. An die Abgabestelle 24, die den höchsten Punkt der Transportvorrichtung bildet, schließt sich eine abwärtsführende Wendelrutsche 26 an, die um eine vertikale Säule 27 wendelförmig herum verläuft und sich von der Abgabestelle 24 bis zu einer unteren Vermessungsstation 29 erstreckt (Figur 5).

Im Verlaufe der Transportvorrichtung 21 ist über dem Transportband 22 ein Abstreifer 28 in Form einer rotierenden Bürste angeordnet. Der Abstreifer 28 verhindert, dass zwei Packungen sich ganz oder teilweise überlagern. Im Falle einer Überlagerung streift er die obere Packung von der unteren Packung ab, so dass beide auf dem Förderband nebeneinander oder hintereinander zu liegen kommen.

Die Wendelrutsche erstreckt sich um mehr als eine Umdrehung um die Säule 27, die in einem Gestell 30 montiert ist. Die Wendelrutsche 26 weist einen wendelförmigen Boden 31 und eine den Boden radial nach außen begrenzende Umfangswand 32 auf. Die Gestaltung des Bodens 31 wird später noch näher erläutert.

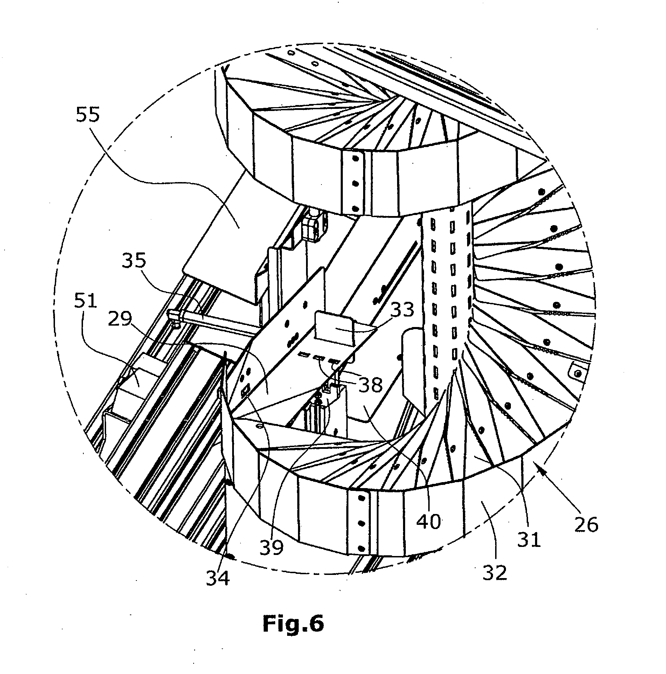

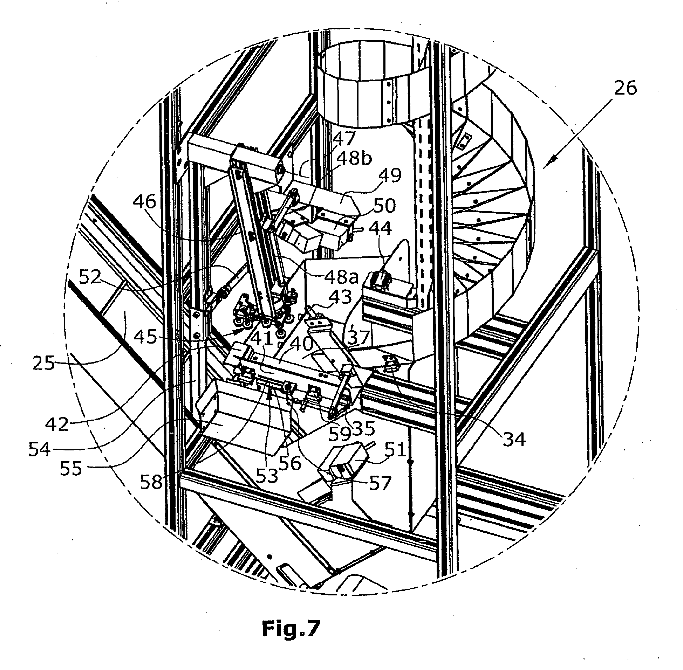

Am unteren Ende der Wendelrutsche 26 befindet sich die Vermessungsstation 29 (Figur 6). Diese weist eine in Querrichtung nahezu horizontale Platte auf, die in Längsrichtung dem Gefälle der Wendelrutsche folgt. Durch einen Schlitz dieser Platte erstreckt sich ein Stopper 33, gegen den eine die Wendelrutsche herabrutschende Packung stößt. In der schrägen Platte der Vermessungsstation 29 befinden sich Öffnungen 38, durch die mehrere Zacken eines Hilfsstoppers 39 von unten hindurch gesteckt werden können. Wenn der Stopper 33 abgesenkt und der Hilfsstopper 39 angehoben wird, gleitet die Packung über die Zacken des Hilfsstoppers hinweg von der Vermessungsstation 29 zu der Übergabestation 40. Die nächstfolgende Packung wird von dem Hilfsstopper 39 angehalten und daran gehindert, der ersten Packung zu folgen. Der Hilfsstopper 39 wird erst abgesenkt, nachdem der Stopper 33 angehoben ist. Die Packung gleitet dann gegen den Stopper 33. In der Vermessungsstation 29 erfolgt die Messung der Höhe und der Breite der Packung und die Feststellung, ob die Höhe der liegenden Packung größer ist als die Breite. Die Feststellung, ob die Packung "höher als breit" ist, erfolgt mit Hilfe eines Sensors 43, der die Packungshöhe feststellt und eines Sensors 44, der die Packungsbreite feststellt (Figur 7). Die Sensoren 43 und 44 sind Ultraschallsensoren, die an der Vermessungsstation 29 angeordnet sind und berührungslos die betreffende Abmessung der Packung ermitteln.

Wenn die Packung höher als breit ist, wird ein Auswerfer 35 aktiviert, der die Packung auf den Rücklaufförderer 25 transferiert.

Der im Übergang zur Vermessungsstation 29 vorgesehene Sensor 34 dient zur Steuerung der Transportvorrichtung 21. Der Sensor 34 verhindert, dass die Transportvorrichtung 21 in Gang gesetzt wird, wenn er noch die Anwesenheit einer Packung feststellt. Die Transportvorrichtung 21 wird so lange angetrieben, bis eine Packung die Abgabestelle 24 am oberen Ende der Transportvorrichtung erreicht. Dies wird durch einen dort vorgesehenen oberen Sensor festgestellt. Liegt am Sensor 34 keine Packung an, so läuft die Transportvorrichtung noch ein kurzes Stück weiter, um dann stillgesetzt zu werden. Diejenige Packung, die das Auslösen des oberen Sensors bewirkt hat, fällt dann auf die Wendelrutsche und gleitet auf dieser herab. Diese Steuerung der Transportvorrichtung bewirkt eine gewisse Vorvereinzelung. Auf der Wendelrutsche können sich gleichzeitig mehrere Packungen befinden, jedoch kann es nicht vorkommen, dass die gesamte Wendelrutsche voller Packungen ist. Im Idealfall gleitet zu jedem Zeitpunkt maximal eine Packung die Wendelrutsche herab.

Hinter der Vermessungsstation 29 befindet sich eine Übergabestation 40. Die Übergabestation 40 weist eine in Querrichtung leicht geneigte Platte, eine einseitige Anlageplatte 41 und einen Anschlag 42 auf. Die Übergabestation 40 kann um eine horizontale Querachse herum geschwenkt werden. Die Übergabestation 40 ist entsprechend dem Gefälle der Vermessungsstation 29 geneigt, wenn die Packung von der Vermessungsstation 29 auf die Übergabestation 40 gegen den Anschlag 42 rutscht. Danach wird die Übergabestation um die horizontale Querachse in die dargestellte waagerechte Greifposition geschwenkt.

Eine Packung, die auf der Übergabestation 40 liegt und die die von der Vermessungseinrichtung geforderten Kriterien erfüllt hat, wird von einem Greifer 45 ergriffen, der hier als Sauggreifer mit mehreren gesteuerten Saugnäpfen ausgebildet ist. Der Greifer 45 befindet sich am Ende eines Schwenkarms 46, der um eine horizontale Achse 47 gesteuert zwischen der Übergabestation 40 und einem Abholfach 55 schwenkbar ist. An dem Schwenkarm 46 ist der Greifer 45 in der Höhe verfahrbar. Hierzu ist ein Pneumatikzylinder 48a vorgesehen. Das Verschwenken erfolgt durch einen weiteren Pneumatikzylinder 48b, der an einer an dem Gestell befestigten Platte 49 abgestützt ist. Die Platte 49 trägt ferner einen Scanner 50 zum Abtasten einer Identifizierung auf der Packung, z. B. einen Barcode-Leser oder einen Data-Matrix-Leser. Der Scanner 50 ist so angeordnet, dass er die obere Breitseite und die freiliegende Schmalseite einer in der Übergabestation 40 liegenden Packung abtastet und einen auf diesen Seiten vorhandenen Barcode erkennt.

Ein weiterer Scanner 51 befindet sich in der Nähe des Abholfaches 55. Dieser Scanner erfasst die Packung, wenn diese an dem Greifer 45 hängt und vor den Scanner geschwenkt wird. Er erfasst diejenigen Seiten der Packung, die in der Übergabestation 40 von Wänden verdeckt waren, sowie die Stirnseiten der Packung.

Eine Packung, auf der eine Identifizierung erkannt wurde, wird von dem Greifer 45 in dem Abholfach 55 abgelegt, Dieses ist an einem Pendelarm 54 angebracht, der von einem Pneumatikzylinder 52 zwischen einer Empfangsposition und einer Abholposition schwenkbar ist. In der Abholposition kann die Packung von einem Manipulator des automatischen Warenlagers abgeholt werden.

An der Übergabestation 40 befindet sich ein weiterer Auswerfer 56 in Form eines Hebels, der um eine Achse 57 schwenkbar ist und durch einen Schlitz 58 in der Anlageplatte 41 hindurchgeht, um eine Packung von der Übergabestation 40 in den Abfallkorb 37 hinein abzuwerfen. Wenn die Packung die vorgegebenen Maximalabmessungen überschreitet, so dass sie nicht in eine Lagerstelle des Warenlagers hineinpasst, wird sie in der Übergabestation ausgeworfen. Hierzu dient der Auswerfer 56, der durch eine Öffnung in der Seitenwand vordringt und die Packung herabstößt, so dass diese in einen Abfallkorb 37 fällt (Figur 7). Der Auswerfer 56 ist Teil einer Selektionsvorrichtung 53 zum Selektieren nicht für die Einlagerung geeigneter Packungen. Er wird betätigt, wenn eine Identifizierung auf der Packung nicht festgestellt oder nicht gelesen werden konnte. Dann wird die Packung zunächst von dem Greifer 45 auf die Übergabestation 40 zurückgelegt und dann von dort in den Abfallkorb 37 abgeworfen. Der Auswerfer 56 wird auch betätigt, wenn durch einen an der Übergabestation 40 vorgesehenen Sensor 59 festgestellt wird, dass die in der Übergabestation an einem vorderen Anschlag anliegende Packung "zu lang" ist, d.h. dass ihre Länge einen Grenzwert übersteigt, so dass eine Einlagerung nicht möglich ist. Ist dies der Fall, so erfolgt durch Betätigung des Auswerfers 56 ein Auswerfen der Packung in den Abfallkorb 37.

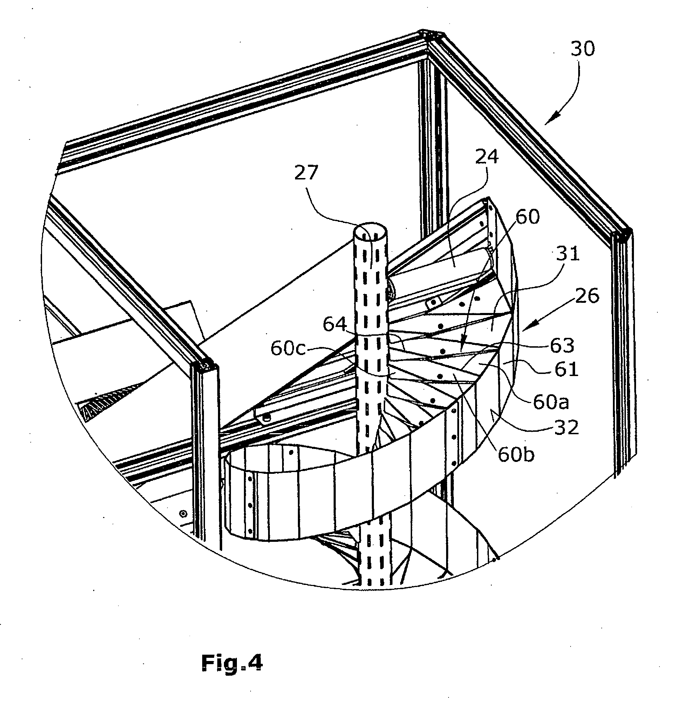

Der Boden 31 der Wendelrutsche 26 besteht gemäß Figur 4 aus einzelnen Lamellen 60, die jeweils zusammen mit einem Umfangsteil 61 einstückig aus Blech hergestellt sind. Die Umfangsteile 61 mehrerer Lamellen sind einstückig miteinander verbunden. Jede Lamelle 60 steht von dem Umfangsteil 61 zur Säule 27 hin ab. Die Lamelle 60 weist einen äußeren ersten Bereich 60a, einen mittleren zweiten Bereich 60b und einen inneren Bereich 60c auf. Die drei Bereiche sind durch Knicklinien 63, 64 verbunden. Der erste Bereich 60a hat die geringste Steigung, der zweite Bereich 60b hat eine größere Steigung und der innere Bereich 60c die größte Steigung. Durch die Knicklinien 63, 64 sowie durch die Knicke, die sich zwischen zwei Lamellen 60 ergeben, wird erreicht, dass der Boden 31 der Wendelrutsche uneben ist, so dass auf ihm die Packungen "tanzen". Dadurch wird eine Agitation erreicht, so dass eine Packung dazu veranlasst wird, sich mit einer längslaufenden Schmalseite gegen die Außenseite 32 der Wendelrutsche zu legen. Die Packung kommt dann in der Vermessungsstation 29 in ausgerichtetem Zustand in definierter Position an.

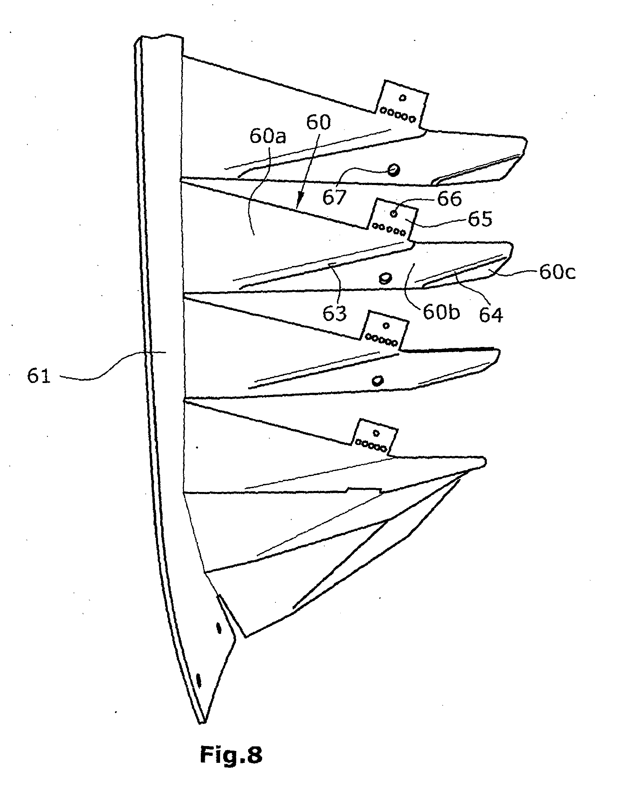

Figur 8 zeigt einen Abschnitt der Wendelrutsche im abgewickelten Zustand. Dabei sind das Umfangsteil 61 und die davon abstehenden Lamellen 60 erkennbar. Ebenfalls ist zu sehen, dass die Abschnitte 60a, 60b und 60c in dieser Reihenfolge größer werdende Steigungen haben. Die Lamellen sind jeweils mit einer Lasche 65 mit Loch 66 versehen, das mit einem Loch 67 einer benachbarten Lamelle zusammengreift, um einen im wesentlichen lückenlosen Rutschenboden zu bilden.

Die Steuerung des Warenannahmeautomaten 14 erfolgt durch den Computer des Warenlagers, der auch den Manipulator des Warenlagers steuert und die Ein- und Auslagerung von Packungen durchführt. Wenn der Steuerrechner des Warenlagers einen Befehl zur Ausgabe einer Ware gibt, wird die Einlagerung unterbrochen. In diesem Fall hat die Warenausgabe Vorrang. Nach Beendigung der Warenausgabe steht der Lager-Manipulator für die Entgegennahme von Waren aus dem Warenannahmeautomaten 14 zur Verfügung.

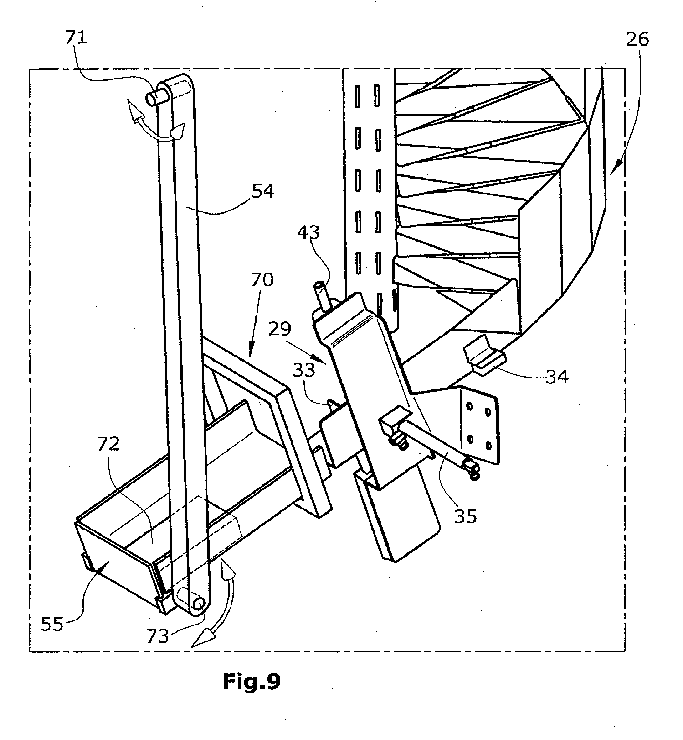

In Figur 9 ist eine alternative Ausführungsform der Lesevorrichtung zum Lesen der Identifikation an der Packung dargestellt, mit einem veränderten Aufbau der Übergabestation 40.

In der Figur 9 ist die Wendelrutsche 26 die gleiche wie bei dem ersten Ausführungsbeispiel und an diese Wendelrutsche schließt sich zunächst die Vermessungsstation 29 mit dem Stopper 33 und dem Auswerfer 35 an. Auf der Gefällestrecke hinter der Vermessungsstation 29 ist die Lesevorrichtung 70 vorgesehen. Hierbei handelt es sich um eine den Transportweg umgebende Schleife, die eine Hochfrequenzantenne enthält. Die Lesevorrichtung 70 dient dazu, von einem Tag oder Chip an der Packung berührungslos eine Identifikation auszulesen. Bei dem Tag oder Chip handelt es sich um einen Transponder, der auf ein externes Anfragesignal hin seinen Inhalt ausliest. Dieses System ist als RFID-System bekannt (Radio Frequency Identification). Es bietet den Vorteil, dass die Packung nicht wie beim Lesen eines Barcodes in eine bestimmte Position in Bezug auf die Lesevorrichtung gebracht werden muss. Ein weiterer Vorteil besteht darin, dass bei dem RFID-System erheblich mehr Daten gespeichert und abgerufen werden können als bei dem üblichen Barcode-System. So ist es beispielsweise möglich, außer der Identifikation des betreffenden Medikaments auch das Verfallsdatum, die Chargennummer oder andere Daten zu speichern und auf Abfrage auszugeben.

Bei dem vorliegenden Ausführungsbeispiel ist die Lesevorrichtung 70 am Zulaufende des Abholfaches 55 angeordnet, das durch den Pendelarm 54 von der in Figur 9 dargestellten Empfangsposition um die Schwenkachse 71 herum quer zur Transportrichtung in eine (nicht dargestellte) Abholposition geschwenkt werden kann, in der der Manipulator des automatischen Warenlagers auf die Packung 72 zugreifen kann.

In dem Fall, dass die Identifikation auf der Packung nicht vorhanden ist oder nicht lesbar ist, wird das Abholfach 55 um eine quer zum Förderweg verlaufende Achse 73 runtergeschwenkt, so dass die Packung 72 in den Abfallkorb geworfen wird.

## Patentansprüche

1. Warenannahmeautomat, insbesondere zum Einlagern von Packungen in ein automatisches Warenlager (10), das zahlreiche Lagerstellen und einen die Packungen transportierenden Lager-Manipulator aufweist, mit einer von einer Eingabestelle (20) abgehenden Transportvorrichtung (21),
**dadurch gekennzeichnet,**
**dass** die Transportvorrichtung (21) zu einer Wendelrutsche (26) führt, auf der eine Ausrichtung der Packungen erfolgt und hinter der eine Selektionsvorrichtung (53) vorgesehen ist.

2. Warenannahmeautomat nach Anspruch 1, **dadurch gekennzeichnet, dass** die Transportvorrichtung (21) derart angetrieben ist, dass sie eine Packung bis zu einer Abgabestelle (24) fördert und eine darüber hinaus gehende Förderbewegung nur dann durchführt, wenn ein Sensor (34) am unteren Endbereich der Wendelrutsche (26) keine Packung feststellt.

3. Warenannahmeautomat nach Anspruch 1 oder 2, **dadurch gekennzeichnet, dass** die Wendelrutsche (26) einen Rutschenboden (31) mit Knicklinien (63, 64) aufweist, wobei die Knicklinien Flächen mit verschiedenen Steigungen gegenseitig abgrenzen.

4. Warenannahmeautomat nach Anspruch 3, **dadurch gekennzeichnet, dass** die Steigung der Flächen (60a, 60b, 60c) mit zunehmendem Abstand von der vertikalen Längsachse der Wendelrutsche kleiner wird.

5. Warenannahmeautomat nach einem der Ansprüche 1-4, **dadurch gekennzeichnet, dass** die Transportvorrichtung (21) ein mit Stollen (23) versehenes Transportband (22) ist.

6. Warenannahmeautomat nach einem der Ansprüche 1-5, **dadurch gekennzeichnet, dass** die Transportvorrichtung (21) einen Abstreifer (28) zur Beseitigung von Überlagerungen von Packungen aufweist.

7. Warenannahmeautomat nach einem der Ansprüche 1-6, **dadurch gekennzeichnet, dass** ein gesteuerter Stopper (33) am unteren Ende der Wendelrutsche vorgesehen ist, der hintereinander liegende Packungen voneinander trennt.

8. Warenannahmeautomat nach einem der Ansprüche 1-7, **dadurch gekennzeichnet, dass** eine Vermessungsstation (29) vorgesehen ist, mit einem ersten Sensor (43) zur Messung der Höhe und einem zweiten Sensor (44) zur Messung der Breite der Packung und dass ein Auswerfer (35) die Packung auf die Transportvorrichtung (21) zurückleitet, wenn die gemessene Höhe größer ist als die gemessene Breite.

9. Warenannahmeautomat nach einem der Ansprüche 1-8, **dadurch gekennzeichnet, dass** an einer Übergabestation (40) ein auf die Packungen zugreifender Greifer (45) vorgesehen ist, der die Packungen in einem Abholfach (55) ablegen kann.

10. Warenannahmeautomat nach einem der Ansprüche 1-9, **dadurch gekennzeichnet, dass** mindestens eine Lesevorrichtung (50, 51) zum Lesen einer Identifikation an der Packung vorgesehen ist und dass eine Packung mit erfolgreich gelesener Identifikation in einem Abholfach (55) abgelegt wird, auf welches der Lager-Manipulator zugreifen kann.

11. Warenannahmeautomat nach Anspruch 10, **dadurch gekennzeichnet, dass** ein Auswerfer (56) vorgesehen ist, der in dem Fall, dass keine Identifikation gelesen werden kann, die Packung in einen Abfallkorb (37) abwirft.

12. Warenannahmeautomat nach einem der Ansprüche 1 - 11, **dadurch gekennzeichnet, dass** die Transportvorrichtung (21) und die Wendelrutsche (26) in einem Modul (13) enthalten sind, der den Modulen des automatischen Warenlagers (10) angepasst ist.

13. Warenannahmeautomat nach einem der Ansprüche 1 - 12, **dadurch gekennzeichnet, dass** mindestens eine Lesevorrichtung (70) zum Lesen einer Identifikation an der Packung (72) vorgesehen ist, und dass die Lesevorrichtung eine Hochfrequenzantenne enthält, die mit einem an der Packung vorgesehenen Transponder zusammenwirkt.

14. Warenannahmeautomat nach den Ansprüchen 10 und 13, **dadurch gekennzeichnet, dass** das Abholfach (55) im Zuge des Schwerkraft-Transportweges hinter einer Vermessungsstation (29) angeordnet ist und in Abhängigkeit von dem von der Lesevorrichtung (70) empfangenen Signal quer zu dem Transportweg in eine Abholposition bewegbar ist.

## Claims

1. Automatic goods receiving device, in particular for intaking packages into an automatic store-room (10) that comprises a plurality of storage positions and a storage manipulator transporting the packages, comprising a transport device (21) extending from an input position (20),
**characterized in that**
the transport device (21) leads to a helical chute (26) on which the packages are orientated and behind which a selection device (53) is provided.

2. Automatic goods receiving device of claim 1, **characterized in that** the transport device (21) is driven such that it conveys a package to a delivery position (24) and performs a conveying motion beyond this position only if a sensor (34) in the lower end portion of the helical chute (26) detects no package.

3. Automatic goods receiving device of claim 1 or 2, **characterized in that** the helical chute (26) has a chute bottom (31) with fold lines (63, 64), said fold lines delimiting surfaces with different inclinations.

4. Automatic goods receiving device of claim 3, **characterized in that** the inclination of the surfaces (60a, 60b, 60c) decreasing as the distance from the vertical longitudinal axis of the helical chute increases.

5. Automatic goods receiving device of one of claims 1-4, **characterized in that** the transport device (21) is a conveyor belt (22) with bars (23).

6. Automatic goods receiving device of one of claims 1-5, **characterized in that** the transport device (21) has a stripper (28) for eliminating superpositions of packages.

7. Automatic goods receiving device of one of claims 1-6, **characterized in that** a controlled stopper (33) is provided at the lower end of the helical chute, which separates packages lying one behind the other.

8. Automatic goods receiving device of one of claims 1-7, **characterized in that** a measuring station (29) is provided, comprising a first sensor (43) for measuring the height and a second sensor (44) for measuring the width of the package, and that an ejector (35) returns a package onto the transport device (21), if the measured height is larger than the measured width.

9. Automatic goods receiving device of one of claims 1-8, **characterized in that** a gripper (45) gripping the packages is provided at a transfer station (40), said gripper being adapted to deposit the packages into a pick-up tray (55).

10. Automatic goods receiving device of one of claims 1-9, **characterized in that** at least one reading device (50, 51) is provided for reading an identification on the package, and that a package with a successfully read identification is deposited in a pick-up tray (55) that can be accessed by the storage manipulator.

11. Automatic goods receiving device of claim 10, **characterized in that** an ejector (56) is provided which, in the event no identification can be read, drops the package into a waste bin (37).

12. Automatic goods receiving device of one of claims 1-11, **characterized in that** the transport device (21) and the helical chute (26) are contained in a module (13) that corresponds to the modules of the automatic store-room (10).

13. Automatic goods receiving device of one of claims 1-12, **characterized in that** at least one reading device (70) is provided for reading an identification on a package (72), and that the reading device includes a highfrequency antenna cooperating with a transponder provided on the package.

14. Automatic goods receiving device of claims 10 and 13, **characterized in that** the pick-up tray (55) is arranged downstream a measuring station (29) in the direction of the gravity transport path and is adapted to be moved transverse to the transport path into a pick-up position in response to the signal received from the reading device (70).

## Revendications

1. Automate de réception des marchandises, particulièrement pour stocker des paquets dans un dépôt automatique (10) avec plusieurs endroits de stockage et un manipulateur du dépôt transportant les paquets, comprenant un dispositif de transport (21) s'étendant d'un endroit d'introduction (20),
**caractérisé en ce que**
le dispositif de transport (21) mène à une chute en hélice (26) sur laquelle les paquets sont alignés et après laquelle est prévu un dispositif de sélection (53).

2. Automate de réception des marchandises selon la revendication 1, **caractérisé en ce que** le dispositif de transport (21) est entraîné de manière à ce qu'il transporte un paquet jusqu'à un endroit de distribution (24) et fasse un mouvement de transport au-delà de cet endroit seulement si un capteur (34) ne détecte pas un paquet dans la zone d'extrémité basse de la chute en hélice (26).

3. Automate de réception des marchandises selon la revendication 1 ou 2, **caractérisé en ce que** la chute en hélice (26) comprend un fond de chute (31) avec des lignes de pli (63, 64), les lignes de pli délimitant des surfaces de différentes pentes.

4. Automate de réception des marchandises selon la revendication 3, **caractérisé en ce que** la pente des surfaces (60a, 60b, 60c) décroît avec la croissance de l'écart de l'axe longitudinal vertical de la chute en hélice.

5. Automate de réception des marchandises selon l'une quelconque des revendications 1-4, **caractérisé en ce que** le dispositif de transport (21) est une bande de transport (22) munie de nervures (23).

6. Automate de réception des marchandises selon l'une quelconque des revendications 1-5, **caractérisé en ce que** le dispositif de transport (21) comprend une racle (28) pour éliminer des superpositions de paquets.

7. Automate de réception des marchandises selon l'une quelconque des revendications 1-6, **caractérisé en ce qu'**une butée commandée (33) est prévue à l'extrémité basse de la chute en hélice, la butée séparant des paquets positionnés l'un derrière l'autre.

8. Automate de réception des marchandises selon l'une quelconque des revendications 1-7, **caractérisé en ce que** une station de mesurage (29) est prévue, comprenant un premier capteur (43) pour mesurer la hauteur et un deuxième capteur (44) pour mesurer la largeur d'un paquet, et qu'un éjecteur (35) retourne le paquet sur ledit dispositif de transport (21) quand la hauteur mesurée est plus grande que la largeur mesurée.

9. Automate de réception des marchandises selon l'une quelconque des revendications 1-8, **caractérisé en ce qu'**une griffe (45) prenant les paquets est prévue en une station de transfert (40), la griffe pouvant déposer les paquets dans un compartiment de récupération (55).

10. Automate de réception des marchandises selon l'une quelconque des revendications 1-9, **caractérisé en ce qu'**au moins un dispositif de lecture (50, 51) est prévu pour lire une identification sur le paquet, et qu'un paquet, dont l'identification était lue avec succès, est disposé dans un compartiment de récupération (55) auquel peut accéder le manipulateur du dépôt.

11. Automate de réception des marchandises selon la revendication 10, **caractérisé en ce qu'**un éjecteur (56) est prévu qui fait tomber le paquet dans un réservoir des déchets (37), en cas aucune identification peut être lue.

12. Automate de réception des marchandises selon l'une quelconque des revendications 1-11, **caractérisé en ce que** le dispositif de transport (21) et la chute en hélice (26) sont inclus dans un module (13) correspondant aux modules du dépôt automatique (10).

13. Automate de réception des marchandises selon l'une quelconque des revendications 1-12, **caractérisé en ce qu'**au moins un dispositif de lecture (70) est prévu pour lire une identification sur un paquet (72), et que le dispositif de lecture comprend une antenne à haute fréquence coopérant avec un transpondeur prévu sur le paquet.

14. Automate de réception des marchandises selon la revendication 10 ou 13, **caractérisé en ce que** le compartiment de récupération (55) est positionné en arrière d'une station de mesurage (29), vu dans la direction du chemin de transport par gravité, et qu'il est déplaçable, en fonction du signal reçu par ledit dispositif de lecture (70), dans une position de récupération transversalement par rapport audit chemin de transport.
